# EUROPÄISCHE PATENTANMELDUNG

(11) **EP 1 876 433 A2**
(43) Veröffentlichungstag der Anmeldung: **09.01.2008**
(21) Anmeldenummer: 06123693.1
(22) Anmeldetag: 08.11.2006
(51) Int. Cl.: G01G 21/23, G01G 3/12

(54) **Wägemodul**

(30) Priorität: 07.07.2006 US 482163
(71) Anmelder: Mettler-Toledo GmbH, 8606 Greifensee (CH)
(72) Erfinder: Leahy, Tom, 82100, Castelsarrasin (FR); Queen, Gregory A., Pickerington, OH 43147 (US); Bäumel, Helmut, 8606, Greifensee (CH)

(57) **Zusammenfassung**

Wägemodul mit einer ersten Montageinrichtung (1), welche in Kraftkontakt mit einer zu bestimmenden Last (30) steht, einer zweiten Montageinrichtung (2), welche mit einer das Wägemodul tragenden Struktur (34) verbindbar ist, und einer zwischen den Montageeinrichtungen (1, 2) angeordneten Wägezelle (3), welche mit einem Kraftübertragungselement (22) zusammenwirkt, dadurch gekennzeichnet, dass das Wägemodul eine erste und eine zweite Aufnahmeschale (23, 24), welche jeweils eine Mulde (25, 26) zur Aufnahme des Kraftübertragungselements (22) aufweisen und zwischen den Montageeinrichtungen (1, 2) angeordnet sind, wobei mindestens eine Mulde (25) einen elliptischen Querschnitt in einer im Wesentlichen zur Lastrichtung orthogonalen Ebene aufweist.

## Beschreibung

Die Erfindung betrifft ein Wägemodul für eine darin anzuordnende Wägezelle.

Wägemodule können in Abhängigkeit des verwendeten Wägezellen-Typs und des gewünschten Lastbereichs in unterschiedlichen Gebieten eingesetzt werden. Wägemodule mit Hochlastwägezellen werden vor allem zur Bestimmung des Gewichts und zur Wägung der Inhalte von grossvolumigen Behältern, Silos, Tanks, Reaktionsgefässen und/oder Reaktionsgebinden verwendet. Die Wägung des Inhalts erfolgt im Allgemeinen über eine Differenzwägung zwischen dem leeren und dem gefüllten Behälter. Derartige Wägemodule können auch unter extremen Aussenbedingungen eingesetzt werden, wie beispielsweise im Freien, in einer technischen Anlage oder in einer Produktionsanlage.

Kommerziell erhältlich sind u. a. die Wägemodule "Centerlign" und "Flexmount" von Mettler Toledo. Centerlign weist eine selbstzentrierende, hermetisch verschlossene Hochlastwägezelle in Form einer Rocker-Pin-Wägezelle auf. Flexmount stellt ein Wägemodul mit einer balkenförmigen Wägezelle und einer Überlastsicherung dar. Die Wägezelle ist in der Regel zwischen zwei Montageeinrichtungen angeordnet, welche zur Montage des Wägemoduls zwischen einer Last und einer tragenden Struktur ausgelegt sind. Balkenförmige Wägezelle sind Wägezellen mit einer länglichen Form, deren eines Ende im Allgemeinen fest mit dem Wägemodul verbunden und deren anderes Ende auslenkbar angeordnet ist.

Ein Wägemodul mit einer balkenförmigen Wägezelle wird beispielsweise in der EP 1 275 943 A2 offenbart, wobei die Wägezelle mit einem stift- oder kugelförmigen Kraftübertragungselement zusammenwirkt.

Die bekannten Wägemodule sind vor allem gegen mechanische Beschädigungen des Wägemoduls und/oder der Wägezelle geschützt. Sie weisen Abhebsicherungen und/oder Überlastsicherungen auf, welche ein Abreissen einer Montageeinrichtung sowie eine Zerstörung der Wägezelle wie zum Beispiel durch eine Einwirkung zu schwerer Lasten verhindern soll. Weiterhin sind verschiedene Mittel zur Ausrichtung und/oder Begrenzung des Spiels des Wägemoduls und insbesondere der Montageeinrichtungen in Relation zur Wägezelle und zueinander bekannt.

Neben einer fehlerhaften Ausrichtung des Wägemoduls können auch andere Faktoren das Wägeergebnis beeinflussen. Zu diesen Faktoren zählen unter anderem Temperaturschwankungen und/oder Temperaturänderungen, welche einerseits durch eine Veränderung der Aussen- und/oder Raumtemperatur aber auch beim Erwärmen und/oder Abkühlen des zu wägenden Behälters auftreten können. Wird der zu wägende Behälter erwärmt oder abgekühlt, beispielsweise bei der Durchführung einer chemischen Reaktion, so kann sich dieser aufgrund der thermischen Ausdehnung die Grösse des Behälters verändern.

Eine Wägemodulanordnung und/oder die einzelnen Wägemodule sollten daher in der Lage sein, die auf Grund einer Temperaturänderung hervorgerufene Wärmeausdehnung eines zu wägenden Behälters zu kompensieren. Die einzelnen Wägemodule sollten einerseits in sich stabil, um das Gewicht des zu wägenden Behälters zu tragen, und andererseits beweglich genug sein, um auftretende Störkräfte ohne eine Funktionsbeeinträchtigung der Wägezelle und/oder des Wägemoduls oder ebenfalls ohne ein Verkippen des Behälters aufzunehmen.

Zur Wägung grossvolumiger Behälter wird in der Regel eine Wägemodulanordnung mit mehreren Wägemodulen verwendet, welche unterschiedliche Grade der Beweglichkeit aufweisen. Beispielsweise wird ein spielfreies Modul zusammen mit zwei oder mehr beweglichen Modulen eingesetzt. Das Spiel der Wägemodule wird häufig durch komplexe Mittel beschränkt, welche beispielsweise eine exakte Ausrichtung benötigen oder durch die Reibungskräfte zwischen der Wägezelle und dem Mittel zur Begrenzung des Spiels auftreten. Die auftretenden Reibungskräfte können beispielsweise eine Materialabtragung verursachen, welche die Funktion der Begrenzungsmittel verändern kann.

Die Aufgabe besteht darin, ein verbessertes Wägemodul bereitzustellen, dessen Spiel einfach angepasst werden kann.

Ein verbessertes Wägemodul mit den Merkmalen des Anspruchs 1 ist sowohl stabil als auch in sich flexibel. Insbesondere weist ein derartiges Wägemodul eine Rückstellwirkung bzw. eine Rückstellkraft auf, so dass es in der Lage ist auftretende Störkräfte aufzunehmen und beim Nachlassen der einwirkenden Störkräfte wieder eine Grundposition einzunehmen.

Ein Wägemodul weist eine erste und eine zweite Montageeinrichtung auf. Die erste Montageeinrichtung steht in Kraftkontakt mit einer zu bestimmenden Last, beispielsweise einem zu wägenden Behälter, und die zweite Montageeinrichtung ist mit einer das Wägemodul tragenden Struktur verbindbar. Die tragende Struktur kann beispielsweise der Boden einer Fabrikhalle, der Erdboden, ein geeignetes Gerüst oder auch ein Tisch sein, je nach dem für welche Lasten das Wägemodul ausgelegt ist und welche Aufgaben es erfüllen soll. Eine auf das Wägemodul einwirkende Kraft wird im Allgemeinen über eine der Montageinrichtungen auf eine zwischen den beiden Montageeinrichtungen angeordnete Wägezelle übertragen, welche in Kraftkontakt mit einem Kraftübertragungselement steht. Das Wägemodul weist eine erste und eine zweite Aufnahmeschale mit jeweils einer Mulde zur Aufnahme des Kraftübertragungselements auf, wobei die Aufnahmeschalen zwischen den Montageeinrichtungen angeordnet sind. Die Mulde der ersten und/oder der zweiten Aufnahmeschale ist mit einem elliptischen Querschnitt in einer Ebene orthogonal zur Lastrichtung ausgestaltet. Als Mulde wird hier eine konkave Vertiefung in der Aufnahmeschale bezeichnet.

Die Beweglichkeit eines derartig ausgestaltetes Wägemoduls kann aufgrund der mindestens einen Mulde mit elliptischem Querschnitt einfach eingeschränkt und/oder verändert werden, insbesondere, wenn mehrere Wägemodule zur Wägung einer Last eingesetzt werden. Damit ist das Wägemodul in der Lage, einwirkende Störkräfte ohne eine Funktionsbeeinträchtigung oder ein Verkippen der Last, beispielsweise einem zu wägenden Behälter, aufzunehmen. In Abhängigkeit der Form der zu bestimmenden Last oder des Behälters werden insbesondere in Wägemodulanordnungen Module mit unterschiedlichen Graden der Beweglichkeit kombiniert. Im Allgemeinen wird ein spielfreies Modul zusammen mit mindestens zwei beweglichen Modulen eingesetzt.

Ein Wägemodul kann je nach Ausgestaltung unterschiedliche Typen von Wägezellen mit unterschiedlichen Lastbereichen aufnehmen. Vorzugsweise weisen die einsetzbaren Wägezellen einen mit Dehnmessstreifen versehenen, elastischen Verformungskörper auf und können sowohl als "single ended beam" Wägezelle oder auch als Rocker-Pin-Wägezelle ausgestaltet sein.

In einem erfindungsgemässen Wägemodul wirkt die Wägezelle mit einem Kraftübertragungselement zusammen, welches in einer bevorzugten Ausführungsform kugelförmig ist und den Kraftkontakt zwischen der ersten Montageeinrichtung und der Wägezelle herstellt. Diese Ausführungsform ist insbesondere geeignet, wenn das Wägemodul für eine balkenförmige Wägezelle ausgestaltet ist.

In einer weiteren bevorzugten Ausgestaltung bilden die Wägezelle und das Kraftübertragungselement eine Einheit, welche zwei konvexe Zylinderendflächen mit gleicher oder unterschiedlicher Geometrie aufweist. Ein Beispiel für eine solche Einheit mit symmetrischen konvexen Kugelflächen stellt eine bekannte Rocker-Pin-Wägezelle dar.

Die Aufnahmeschalen, insbesondere deren Form und Grösse, können an die gewünschte Wägezelle und das Kraftübertragungselement angepasst werden. Damit das Kraftübertragungselement in den Aufnahmeschalen beweglich angeordnet werden kann, ist der Radius der Mulde in den Aufnahmeschalen vorzugsweise grösser als der Radius des in der Mulde angeordneten Teils des Kraftübertragungselements.

Der elliptische Querschnitt der Mulde der ersten und/oder zweiten Aufnahmeschale gibt eine bevorzugte Auslenkungsrichtung für das Kraftübertragungselement vor und beschränkt in Bezug auf das Wägemodul das horizontale Spiel zwischen den Montageeinrichtungen orthogonal zur Auslenkungsrichtung. Eine Auslenkung ist nur noch entlang der Längsachse der elliptischen Mulde möglich, wenn eine Aufnahmeschale mit einer elliptischen Mulde und die andere mit einer kreisförmigen Mulde ausgestaltet ist.

Weist ein Wägemodul zwei Aufnahmeschalen mit jeweils einer Mulde mit kreisförmigem Querschnitt auf, so kann das Kraftübertragungselement in alle Richtungen ausgelenkt werden und ist sozusagen frei beweglich.

Weist ein Wägemodul eine Aufnahmeschale eine Mulde mit elliptischem und die andere Aufnahmeschale eine Mulde mit kreisförmigem Querschnitt auf oder weisen beide Aufnahmeschalen elliptische Mulden, welche bezogen auf die Längsachse der Mulden parallel zueinander angeordnet sind, so kann das Kraftübertragungselements nur noch entlang der Längsachse der elliptischen Mulde ausgelenkt werden. Das Wägemodul ist begrenzt beweglich.

Weist ein Wägemodul zwei Aufnahmeschalen mit elliptischem Querschnitt auf, deren Längsachsen um einen bestimmten Winkel und insbesondere um 90° zueinander verdreht sind, so wird die Beweglichkeit des Kraftübertragungselements weiter eingeschränkt oder im Fall eines 90° Winkels sogar nahezu völlig verhindert. Es handelt sich somit um ein spielfreies Wägemodul.

Vorzugsweise kann die erste und/oder die zweite Aufnahmeschale in Bezug auf die Längsachse ihrer elliptischen Mulde in mehreren vorgegebenen Winkeln festgestellt werden, so dass die Richtung der Auslenkung des Kraftübertragungselements in Bezug auf die Wägezelle oder das Wägemodul verändert werden kann. Ein spielfreies Wägemodul kann somit beispielsweise einfach durch Verdrehen und erneutes Feststellen der Aufnahmeschale mit einer elliptischen Mulde in ein begrenzt bewegliches Wägemodul umgewandelt werden.

In einer bevorzugten Ausgestaltung ist die erste Aufnahmeschale mit der Abdeckung verbunden und die zweite Aufnahmeschale ist an der Wägezelle ausgebildet. Diese Anordnung ist vorteilhaft, da so die Gesamthöhe des Wägemoduls verringert werden kann und das Wägemodul stabiler ist.

In einer weiteren bevorzugten Ausgestaltung bilden die Wägezelle und das Kraftübertragungselement eine Einheit, welche zwei konvexe Zylinderendflächen aufweist, die eine gleiche oder unterschiedliche Geometrie haben. Ein Beispiel für eine solche Einheit mit gleichförmigen Zylinderendflächen stellt eine bekannte Rocker-Pin-Wägezelle dar. Diese Wägezelle wird vorzugsweise zwischen zwei Aufnahmeschalen angeordnet, von denen je eine mit einer der beiden Montageeinrichtung verbunden ist. Ein derartiges Wägemodul hat keine bevorzugte Einbaurichtung, so dass entweder die eine oder die andere Montageeinrichtung mit der Last verbunden werden kann.

In einer vorteilhaften Ausgestaltung wird eine Wägemodulanordnung, welche mindestens drei Wägemodule mit darin anzuordnenden Wägezellen aufweist, zur Bestimmung der Masse oder einer von der Masse ableitbaren physikalischen Grösse einer Last eingesetzt, wobei die Last mit den mindestens drei Wägemodulen fest verbunden ist. Eine Last kann beispielsweise ein Behälter und/oder dessen Inhalt sein. Vorzugsweise wird die Hauptauslenkungsrichtung der einzelnen eine Wägemodulanordnung bildenden Wägemodule vorgegeben, wobei im Allgemeinen ein spielfreies Wägemodul als Angelpunkt eingesetzt wird.

Verschiedene Ausführungsbeispiele werden im Folgenden anhand der Figuren beschrieben, wobei gleiche Merkmale gleiche Bezugszeichen aufweisen. Die Figuren zeigen:
- Fig. 1: Eine vereinfachte dreidimensionale Ansicht eines Wägemoduls;
- Fig. 2: Ansicht A des Wägemoduls aus Fig. 1 als vereinfachte Seitenansicht;
- Fig. 3: eine vereinfachte Seitenansicht (Ansicht B, s. Figur 1) einer ersten mit einer Befestigungseinrichtung verbundenen Montageeinrichtung;
- Fig. 4: eine vereinfachte Seitenansicht (Ansicht B, s. Figur 1) einer zweiten mit einer Befestigungseinrichtung verbundenen Montageeinrichtung;
- Fig. 5: eine vereinfachte Aufsicht auf eine zweite Montageeinrichtung eines Wägemoduls;
- Fig. 6: eine vereinfachte Seitenansicht eines Wägemoduls mit einer Rocker-Pin-Wägezelle im Schnitt;
- Fig. 7a: eine schematische Aufsicht auf eine radial ausgerichtete Wägemodulanordnung mit vier Wägemodulen;
- Fig. 7b: eine schematische Aufsicht auf eine tangential ausgerichtete Wägemodulanordnung mit drei Wägemodulen;
- Fig. 7c: eine schematische Aufsicht auf eine Wägemodulanordnung für einen rechteckigen Behälter mit vier Wägemodulen;
- Fig. 8: eine vereinfachte Seitenansicht zweier Aufnahmeschalen mit darin angeordnetem kugelförmigen Kraftübertragungselement;
- Fig. 9: eine vereinfachte Seitenansicht zweier Aufnahmeschalen mit darin angeordneter Einheit aus einem Kraftübertragungselement und einer Wägezelle;
- Fig. 10: eine Aufnahmeschale mit einer konkaven Mulde mit kreisförmigem Querschnitt im Schnitt orthogonal zur Lastrichtung,
- Fig. 11: eine Aufnahmeschale mit einer konkaven Mulde mit elliptischem Querschnitt im Schnitt orthogonal zur Lastrichtung.

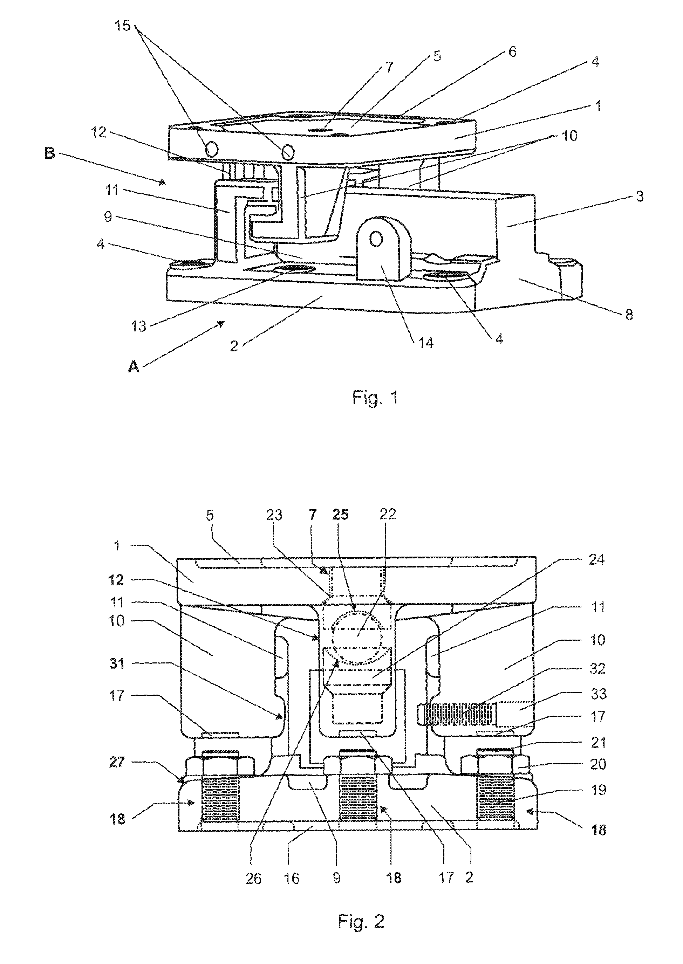

Figur 1 zeigt eine vereinfachte dreidimensionale Ansicht eines erfindungsgemässen Wägemoduls. Das Wägemodul besteht aus zwei im Wesentlichen plattenförmigen Montageeinrichtungen 1, 2 und einer zwischen den Montageeinrichtungen 1,2 angeordneten balkenförmigen Wägezelle 3. Die Wägezelle 3 kann eine beliebige balkenförmige Wägezelle oder ein Wägezellen-Dummy sein. Der Einsatz eines Dummys ist vor allem während des Transports und/oder der Montage des Wägemoduls vorteilhaft. Im Betrieb ist das Wägemodul vorzugsweise so ausgerichtet, dass die erste Montageeinrichtung 1 mit einer zu bestimmenden Last in Kontakt steht und die zweite Montageeinrichtung 2 mit einer tragenden Struktur verbunden ist.

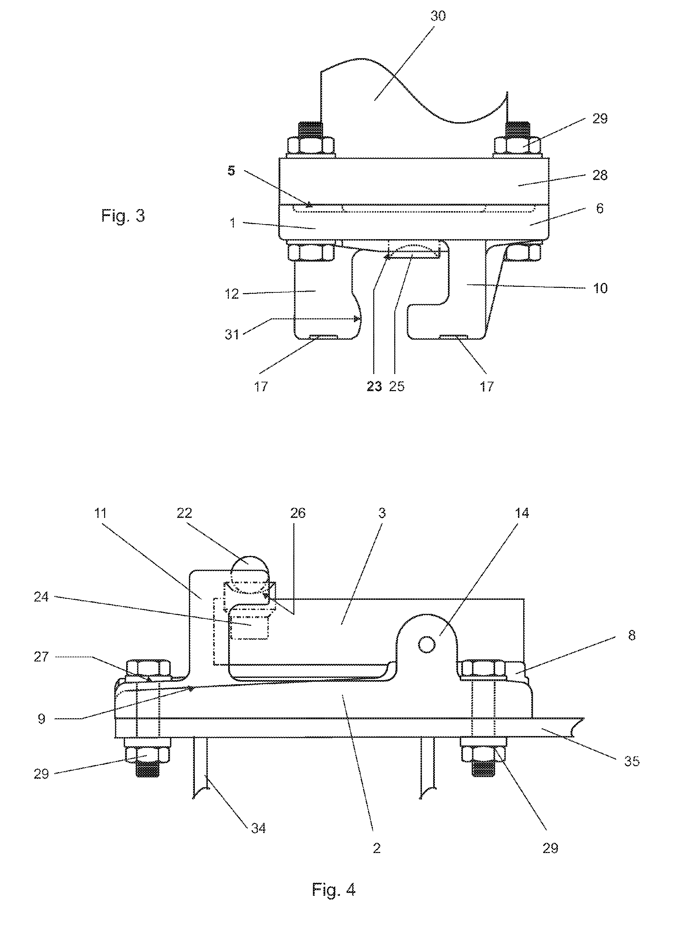

Die erste Montageeinrichtung 1 steht im Betrieb in Kraftkontakt mit einer zu bestimmenden Last. Zur Befestigung des Wägemoduls an der Last und/oder der tragenden Struktur weisen die Montageeinrichtungen 1, 2 an jeder Ecke eine Durchführung 4 für ein geeignetes Befestigungsmittel auf. Eine mit einer Last in Kontakt stehende Montageeinrichtung 1 ist in Figur 3 gezeigt und eine mit einer tragenden Struktur verbundene Montageeinrichtung 2 ist in Figur 4 gezeigt.

Auf ihrer von der Wägezelle abgewandten Seite weist die Montageeinrichtung 1 eine einzelne flächige Vertiefung 5 auf, welche sich nahezu über die gesamte Oberfläche der Montageeinrichtung 1 erstreckt. Die Vertiefung 5 wird durch einen umlaufenden Materialsteg 6 begrenzt, dessen Oberfläche die Kontaktfläche zu einer Befestigungseinrichtung für die Last darstellt.

Etwa in der Mitte der Vertiefung 5 ist eine weitere Durchführung 7 vorhanden, welche zur Befestigung einer Aufnahmeschale für ein mit der Wägezelle 3 in Kraftkontakt stehendes Kraftübertragungsmittel dient (s. a. Figuren 2 und 3). Die Position der Durchführung 7 hängt vor allem von der Ausrichtung und Anordnung der Wägezelle 3 im Wägemodul ab.

Die zweite Montageeinrichtung 2 wird im Betrieb mit einer tragenden Struktur verbunden und weist ebenfalls an jeder Ecke eine Durchführung 4 für ein geeignetes Befestigungsmittel auf.

Auf der der Wägezelle 3 zugewandten Seite der Montageeinrichtung 2 ist ein Sockel 8 angeordnet, auf dem die Wägezelle 3 befestigt wird. Die Wägezelle 3 ist derart ausgerichtet, dass ein Ende fest mit dem Sockel 8 verbunden ist. Das andere Ende ist in Lastrichtung auslenkbar und mit einem bestimmten Abstand zur Montageeinrichtung 2 angeordnet, welcher einerseits durch die Höhe des Sockels 8 und andererseits durch die Tiefe einer Einbauhilfe 9 bedingt wird. Die Einbauhilfe 9 ist in der Montageeinrichtung 2 als kanalartige Vertiefung und vom Sockel 8 zur diesem gegenüberliegenden Kante der Montageeinrichtung 2 hin abfallend ausgestaltet. Dadurch wird der Einbau oder Austausch der Wägezelle 3 in ein montiertes Wägemodul erleichtert.

Im Betrieb stellt das Kraftübertragungselement (hier nicht zu sehen) den Kraftkontakt zwischen den beiden Montageeinrichtung 1, 2 her. Zur Begrenzung des horizontalen und vertikalen Spiels der Montageeinrichtungen 1, 2 zueinander weist das Wägemodul verschiedene Sicherungsmerkmale auf.

Zwischen den beiden Montageeinrichtungen 1, 2 ist ein mehrteiliges Abhebelement angeordnet, welches hier aus ineinandergreifenden hakenförmigen Mitteln 10, 11 besteht. Zwei Haken 10 sind mit der ersten Montageeinrichtung 1 und zwei weitere Haken 11 sind mit der zweiten Montageeinrichtung 2 verbunden. Die Haken 10, 11 greifen jeweils paarweise ineinander, wobei zwischen den beiden Haken-Paaren 10, 11 die Wägezelle 3 angeordnet ist.

Als weiteres Sicherheitsmerkmal weist das Wägemodul eine mit der ersten Montageeinrichtung 1 verbundene Überlastsicherung 12 auf, welche in den Figuren 2 und 3 besser zu erkennen ist. Die Haken-Paare 10, 11 und die Überlastsicherung 12 begrenzen das horizontale Spiel der Montageeinrichtungen 1, 2 zueinander.

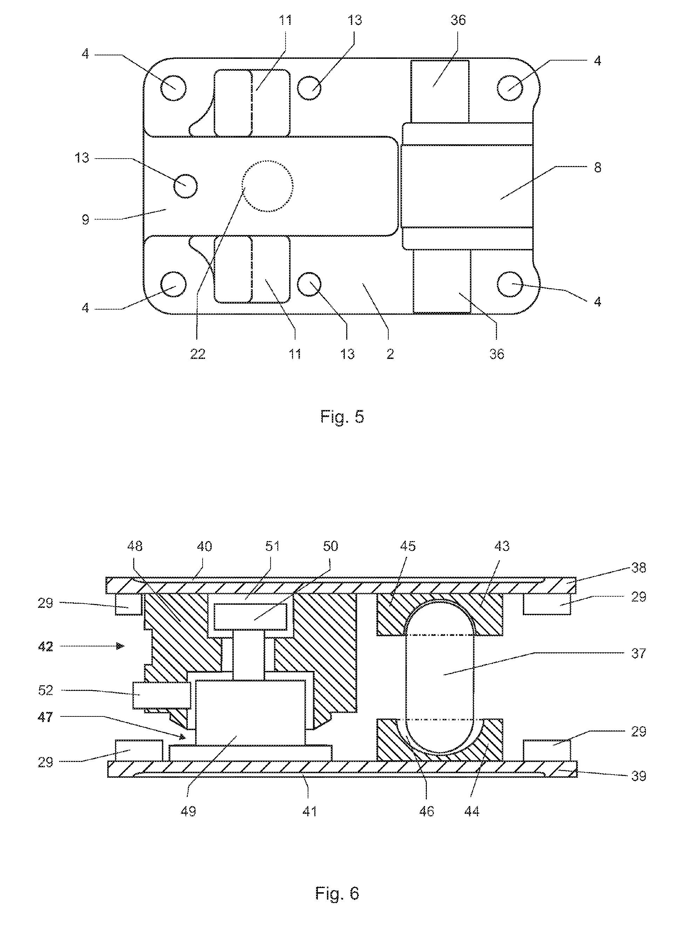

Neben den Durchführungen 4 zur Befestigung des Wägemoduls an einer tragenden Struktur weist die zweite Montageeinrichtung 2 noch drei weitere Durchführungen 13 auf, von denen in dieser Ansicht nur eine zu sehen ist. Diese Durchführungen 13 können vertikale Begrenzungsmittel aufnehmen, welche mit den in Bezug auf die Zeichnung direkt darüber angeordneten Haken 10 und der Überlastsicherung 12 zusammenwirken können. Die Anordnung und Funktion der vertikalen Begrenzungsmittel wird im Zusammenhang mit den Figuren 2 und 5 näher erläutert.

Zur Wägung eines Behälters mit einem Rührwerk oder unter widrigen Aussenbedingungen kann an das Wägemodul ein bekannter Querlenker zur Kompensation auftretender Drehmomente und Seitenlasten angebracht werden. Zur Befestigung eines Querlenkers weist die zweite Montageeinrichtung 2 einen Befestigungsblock 14 auf und die erste Montageeinrichtung 1 mindestens eine Befestigungseinrichtung auf, welche hier in Form von zwei Bohrungen 15 ausgestaltet ist.

In Figur 2 ist eine vereinfachte Seitenansicht A des Wägemoduls aus Figur 1 dargestellt. In dieser Ansicht ist gut zu erkennen, dass sowohl die erste Montageeinrichtung 1, als auch die zweite Montageeinrichtung 2 an ihren der Wägezelle 3 abgewandten Seiten jeweils eine Vertiefung 5, 16 aufweisen, welche zur thermischen Isolation des Wägemoduls gegenüber der Last und/oder der tragenden Struktur dienen.

Die mit der ersten Montageeinrichtung 1 verbundenen Haken 10 und auch die Überlastsicherung 12 weisen an ihrem freien Ende jeweils eine Aussparung 17 auf, welche mit in der zweiten Montageeinrichtung 2 angeordneten vertikalen Begrenzungsmitteln 18 zusammenwirken können. Die Grösse der Aussparung 17 ist an das vertikale Begrenzungsmittel 18 angepasst.

Jeweils ein vertikales Begrenzungsmittel 18 ist unterhalb der Haken 10 und der Überlastsicherung 12 in der zweiten Montageinrichtung 2 angeordnet. Ein vertikales Begrenzungsmittel 18 besteht aus drei funktionellen Teilen, einer Verankerung 19, welche im Wesentlichen in der zweiten Montageeinrichtung 2 angeordnet ist, einem Kopf 20 mit einem im Vergleich zur Verankerung 19 vergrössertem Querschnitt und einem der ersten Montageeinrichtung 1 zugewandten Anschlag 21. Als Begrenzungsmittel 18 kann beispielsweise eine Schraube mit Kopf oder auch eine Gewindestange mit passender Mutter eingesetzt werden. Vorzugsweise sind die Begrenzungsmittel 18 einstellbar ausgestaltet, so dass die Höhe des aus der zweiten Montageeinrichtung 2 herausragenden Teils der Begrenzungsmittel 18 verändert und das vertikale Spiel der beiden Montageeinrichtungen zueinander eingestellt werden kann.

Die Begrenzungsmittel 18 dienen nicht nur als Anschlag für die Überlastsicherung 12 und die Haken 10, sondern können mit diesen zusammenwirken und so beispielsweise eine Grundstellung des Wägemoduls definieren und/oder sogar fixieren, wenn das Spiel zwischen den beiden Montageeinrichtungen 1, 2 durch die einstellbaren Begrenzungsmittel 18 aufgehoben wird.

Zwischen den Haken-Paaren 10, 11 und der Überlastsicherung 12 sowie zwischen der zweiten Montageeinrichtung 2 und der Wägezelle 3 ist das mit der Wägezelle 3 zusammenwirkende Kraftübertragungselement 22 angeordnet. Das Kraftübertragungselement 22 kann sowohl ein beliebiger bekannter Lastaufnehmer, aber auch, wie hier gezeigt, ein in zwei Aufnahmeschalen 23, 24 beweglich gelagertes kugelförmiges Element sein. Der Kraftkontakt zwischen den beiden Montageeinrichtungen 1, 2 wird nur über die Wägezelle 3 und das in den Aufnahmeschalen 23, 24 bewegliche Kraftübertragungselement 22 hergestellt.

Die Aufnahmeschale 23 ist mit der ersten Montageeinrichtung 1 verbunden und die Aufnahmeschale 24 mit der Wägezelle 3. Die Aufnahmeschalen 23, 24 weisen jeweils eine konkave Mulde 25, 26 auf, welche einen kreisförmigen oder elliptischen Querschnitt haben kann. In diesem Ausführungsbeispiel weist die Aufnahmeschale 23 eine konkave Mulde 25 mit elliptischem Querschnitt auf, wobei die Längsachse der Mulde 25 senkrecht zur Zeichnungsebene verläuft. Die Aufnahmeschale 23 ist in der Bohrung 7 in der ersten Montageeinrichtung arretierbar. Vorzugsweise ist die Bohrung 7 und auch das mit dieser zusammenwirkende Ende der Aufnahmeschale 23 vieleckig, insbesondere symmetrisch, also quadratisch oder als gleichseitiges Sechseck ausgestaltet, so dass die Aufnahmeschale 23 in mehreren fest vorgegebenen Positionen angeordnet werden kann, wodurch wiederum die Auslenkungsrichtung des Kraftübertragungselements 22 vorgeben werden kann, wenn diese Aufnahmeschale eine elliptische Mulde 25 aufweist.

Die andere Aufnahmeschale 24 kann fest und/oder in mehreren Winkeln arretierbar mit der zweiten Montageeinrichtung 2 verbunden sein oder die Aufnahmeschale 24 kann zur Verringerung der Gesamthöhe des Wägemoduls an der Wägezelle 3 ausgestaltet und/oder in diese integriert sein. Die konkave Mulde 26 in der Aufnahmeschale 24 ist kreisförmig ausgestaltet. Aufgrund der unterschiedlichen Geometrien der Aufnahmeschalen 23, 24 wird die Bewegung des kugelförmigen Kraftübertragungselements 22 eingeschränkt und seine Auslenkung auf eine bevorzugte Richtung, entlang der Längsachse der elliptischen Mulde 25 beschränkt.

Zur Einstellung und/oder Begrenzung des horizontalen Spiels der beiden Montageeinrichtung 1, 2 zueinander, weisen die Haken 10, 11 sowie die Überlastsicherung 12 feste horizontale Begrenzungsmittel 31 und/oder einstellbare horizontale Begrenzungsmittel 32 auf. Die festen Begrenzungsmittel 31 sind hier einfache Anschläge, welche direkt als Teil des Hakens 10 ausgestaltet wurden. Ein einstellbares Begrenzungsmittel 32 kann beispielsweise ein Madenschraube oder eine Gewindestange sein, welche in einer senkrecht zur Lastrichtung angeordneten Durchführung 33 geführt wird. Die Haken 10, 11 sowie die Überlastsicherung 12 können entweder mit festen horizontalen Begrenzungsmitteln 31 oder mit einstellbaren horizontalen Begrenzungsmitteln 32 ausgestaltet werden, wobei einstellbare Begrenzungsmittel 32 die Anpassung des Wägemoduls an unterschiedliche Aussenbedingungen erlauben.

Weiterhin sind in Figur 2 die kanalförmige Einbauhilfe 9 und eine Drainage zu erkennen. Die der Wägezelle 3 zugewandte Fläche 27 der zweiten Montageeinrichtung 2 ist als Drainage ausgestaltet und fällt in Bezug auf die Zeichnung nach aussen ab, so dass auf die zweite Montageinrichtung 2 auftreffende Feuchtigkeit und/oder Flüssigkeiten rasch abgeleitet werden. Eine vergleichbare Funktion erfüllt auch die Einbauhilfe 9.

Figur 3 zeigt eine vereinfachte Seitenansicht einer ersten Montageeinrichtung 1 in einer Ausrichtung welche der Ansicht aus Richtung B aus Figur 1 entspricht. An der ersten Montageeinrichtung 1 sind zwei Haken 10, von denen in dieser Ansicht nur einer zu sehen ist, die Überlastsicherung 12 mit einem festen horizontalen Begrenzungsmittel 31 und eine Aufnahmeschale 23 mit einer konkaven, elliptischen Mulde 25 angeordnet. Die im Betrieb von der Wägezelle abgewandte Seite der Montageeinrichtung 1 weist eine flächige Vertiefung 5 auf, welche zur thermischen Isolation des Wägemoduls dient. Die Vertiefung 5 wird durch einen umlaufenden Materialsteg 6 begrenzt, dessen Oberfläche eine Kontaktfläche für eine Befestigungseinrichtung 28 darstellt.

Die Befestigungseinrichtung 28 kann beispielsweise ein Flansch sein, dessen Dimensionen an die Montageeinrichtung 1 angepasst sind. Die Befestigungseinrichtung 28 schliesst die Vertiefung 5 bezogen auf die Zeichnung nach oben unter Ausbildung eines abgeschlossenen Hohlraums ab. Dieser Hohlraum kann beispielsweise ein Vakuum oder ein stehendes Luftpolster aufweisen oder auch mit einem Material definierter Wärmeleitfähigkeit gefüllt sein, wobei ein stehendes Luftpolster bevorzugt wird.

Die Befestigungseinrichtung 28 ist durch geeignete Befestigungsmittel 29 mit der ersten Montageeinrichtung 1 verbunden, vorzugsweise werden vier Befestigungsmittel 29 verwendet, welche jeweils an einer Ecke der Montageeinrichtung 1 angeordnet sind (s. a. Figur 1). Diese Mittel können wie hier gezeigt Gewindeschrauben mit einer Mutter, aber auch Gewindestangen mit zwei Muttern oder andere zur Befestigung von Flanschen bekannte Mittel umfassen. Die Befestigungseinrichtung 28 ist wiederum mit einer Last 30 verbunden, welche hier als Fuss eines zu wägenden Behälters dargestellt ist.

Figur 4 zeigt eine vereinfachte Seitenansicht einer zweiten Montageeinrichtung 2 in der Ansicht aus Richtung B (s. Figur 1). Zur besseren Übersicht sind in dieser Ansicht die vertikalen Begrenzungsmittel (s. Figur 2) nicht gezeigt.

Die zweite Montageeinrichtung 2 weist zwei Haken 11 auf, von denen hier nur einer zu sehen ist, einen Befestigungsblock 14 für einen Querlenker, einen Sockel 8 zur Befestigung einer balkenförmigen Wägezelle 3 und einer vom Sockel 8 in Bezug auf die Zeichnung nach links abfallend ausgestaltete, kanalförmige Einbauhilfe 9. Die der Wägezelle zugewandte Oberfläche 27 der zweiten Montageeinrichtung 2 ist zu allen Seiten abfallend ausgestaltet. Die Wägezelle 3 ist mit einer Aufnahmeschale 24 mit einer kreisförmigen, konkaven Mulde 26 verbunden, welche ein kugelförmiges Kraftübertragungselement 22 aufnehmen kann.

Im Betrieb wird die zweite Montageeinrichtung 2 mit einer tragende Struktur 34 verbunden, welche als Befestigungseinrichtung 35 vorzugsweise einen Flansch aufweist. Die Montageeinrichtung 2 wird durch geeignete Befestigungsmittel 29 mit der Befestigungseinrichtung 35 verbunden. Die zweite Montageeinrichtung 2 kann ebenso wie die erste Montageeinrichtung mit oder wie hier für die zweite Montageeinrichtung 2 gezeigt ohne Mittel zur thermischen Isolation ausgestaltet sein.

Figur 5 zeigt eine vereinfachte Aufsicht auf eine zweite Montageeinrichtung 2 ohne Wägezelle, welche zusätzlich seitliche Anschläge 36 aufweist. Die seitlichen Anschlägen 36 sind neben dem Sockel 8 zur Befestigung einer hier nicht dargestellten balkenförmigen Wägezelle angeordnet und begrenzen zusätzlich die seitliche Auslenkung der Wägezelle. Das auslenkbare Ende der Wägezelle ist zwischen den Haken 11 angeordnet, wie es durch die Position des Kraftübertragungselements 22 angedeutet wird. In der hier gezeigten Ausführungsform kann ein bekannter Querlenker direkt an einem seitlichen Anschlag 36 befestigt werden.

Die zweite Montageeinrichtung 2 hat eine im Wesentlichen rechteckige Form, wobei an allen vier Ecken Durchführungen 4 für Befestigungsmittel zur Befestigung der zweiten Montageeinrichtung 2 an einer tragenden Struktur oder einer Last vorgesehen sind.

Für vertikale Begrenzungsmittel (s. Figur 2) weist die zweite Montageeinrichtung 2 drei Durchführungen oder Bohrungen 13 auf. Die Bohrungen 13 sind an den Ecken eines Dreiecks angeordnet, dessen Mitte in etwa durch die Position des Kraftübertragungselements 22 bestimmt wird. Die Position der Bohrungen 13 stimmt in etwa mit der Position der an der ersten Montageeinrichtung angeordneten Haken und der Überlastsicherung im aufgestellten Wägemodul überein. Zwei Bohrungen 13 sind neben einem Haken 11 und zwischen dem Haken 11 und einem seitlichen Anschlag 36 angeordnet, die dritte Bohrung 13 ist im Kanal 9 an der dem Sockel 8 gegenüberliegenden Seite der ersten Montageeinrichtung 2 angeordnet.

Figur 6 zeigt eine weitere Ausführungsform eines erfindungsgemässen Wägemoduls mit einer Rocker-Pin-Wägezelle 37 oder einem entsprechenden Wägezellen-Dummy als vereinfachte Seitenansicht. Die Wägezelle 37 ist zwischen zwei Montageeinrichtungen 38, 39 angeordnet. Eine Rocker-Pin-Wägezelle 37 hat keine bevorzugte Einbaurichtung, so dass im Betrieb eine Montageeinrichtung 38, 39 in Kraftkontakt mit der zu bestimmenden Last steht und/oder mit der tragenden Struktur verbunden ist. Beide Montageeinrichtungen 38, 39 weisen an ihrer der Wägezelle 37 abgewandte Seite eine flächige Vertiefung 40, 41 als Mittel zur thermischen Isolation auf. Zum Schutz des Wägemoduls ist zwischen den Montageeinrichtungen 38, 39 eine mehrteilige Abhebesicherung 42 angeordnet.

Bei einer optimalen Ausrichtung und Einstellung des Wägemoduls stehen die beiden Montageeinrichtung 38, 39 nur über die Wägezelle 37 miteinander in Kontakt. Die Wägezelle 37 ist in zwei Aufnahmeschalen 43, 44 gelagert, welche jeweils mit einer der beiden Montageeinrichtungen 38, 39 verbunden sind. Die Aufnahmeschalen 43, 44 weisen beiden eine konkave Mulde 45, 46, welche entweder einen kreisförmigen oder einen elliptischen Querschnitt aufweisen können. Im hier gezeigten Ausführungsbeispiel hat die Mulde 45 einen elliptischen Querschnitt und die Mulde 46 einen kreisförmigen Querschnitt. Je nach Ausgestaltung der Aufnahmeschalen 45, 46 kann eine bevorzugte Auslenkungsrichtung der Rocker-Pin-Wägezelle 39 festgelegt werden.

Die Dimensionen des Wägemoduls können an die gewünschte Wägezelle 37 angepasst werden, wobei Wägezellen 37 mit unterschiedlichen Messbereichen verwendet werden können, also Hochlastwägezellen ebenso wie Präzisionswägezellen.

Die Abhebesicherung 42 besteht aus einem mit der Montageeinrichtung 39 verbundenen mehrteiligen Abhebelement 47 und einem mit der anderen Montageeinrichtung 38 verbundenen Führungselement 48, in dem das mehrteilige Abhebelement 47 geführt wird. Das mehrteilige Abhebelement 47 weist einen Sockel 49 und einen mit diesem Sockel 49 lösbar verbundenen Sicherungsstift 50 auf. Das mit dem Sockel 49 verbundene Ende des Sicherungsstifts 50 hat einen geringeren Durchmesser, als das frei, gegen die Montageeinrichtung 38 gerichtete Ende. Bei einem gut eingestellten Wägemodul wird das mehrteilige Abhebelement 47 kontaktfrei im Führungselement 48 geführt. Vorzugsweise steht die Last, beispielsweise ein zu wägender Behälter, in Kontakt mit der Montageeinrichtung 39 und die Montageeinrichtung 38 in Kontakt mit der tragenden Konstruktion, wobei es auch möglich ist, das Wägemodul mit entgegen gesetzter Orientierung einzubauen.

Die beiden Montageeinrichtungen 38, 39 sind vorzugsweise plattenartig ausgebildet und können an die Form des zu wägenden Behälters und/oder der tragenden Struktur angepasst werden. Für die Montage des Wägemoduls am Behälter und/oder an der tragenden Struktur weisen beide Montageeinrichtungen 38, 39 mehrere geeignete Befestigungsmittel 29 auf.

Der Sicherungsstift 50 ist berührungsfrei in einer Aussparung 51 im Führungselement 48 angeordnet und dient dazu, ein Auseinanderfallen des Wägemoduls und die Trennung der Montageeinrichtungen 38, 39 zu verhindern.

Die Aussparung 51 im Führungselement 48 ist so gestaltet, dass das mehrteilige Abhebelement 47 darin berührungsfrei geführt wird und mit einem gewissen Abstand zur Montageeinrichtung 38 angeordnet ist, wenn das Wägemodul optimal ausgerichtet ist. Das Führungselement 48 stellt somit eine Art Hülse zur Aufnahme des mehrteiligen Abhebelements 47 dar, wobei die Form der Aussparung 51 im Wesentlichen der Form des mehrteiligen Abhebelements 47 entspricht.

Wirken Störkräfte auf das Wägemodul ein, so wird entweder die Montageeinrichtung 38 mit dem Sicherungsstift 50 in Kontakt gebracht oder bei seitlich einwirkenden Störkräften werden Teile des Abhebelements 47 innen in Kontakt mit dem Führungselement 48 gebracht und so das Spiel des Wägemoduls beschränkt. Das Führungselement 48 wirkt somit sowohl als horizontales als auch als vertikales Begrenzungsmittel und der Sicherungsstift 50 stellt eine Art Überlastsicherung dar. Zur Feinabstimmung des Abstands zwischen dem Abhebelement 47 und dem Führungselement 48 können im Führungselement 48 mehrere Begrenzungsmittel 52 angeordnet werden, welche den Abstand zwischen dem Abhebelementen 47 und dem Führungselement 48 begrenzen. Vorzugsweise sind solche Begrenzungsmittel 52 und damit das Spiel einstellbar.

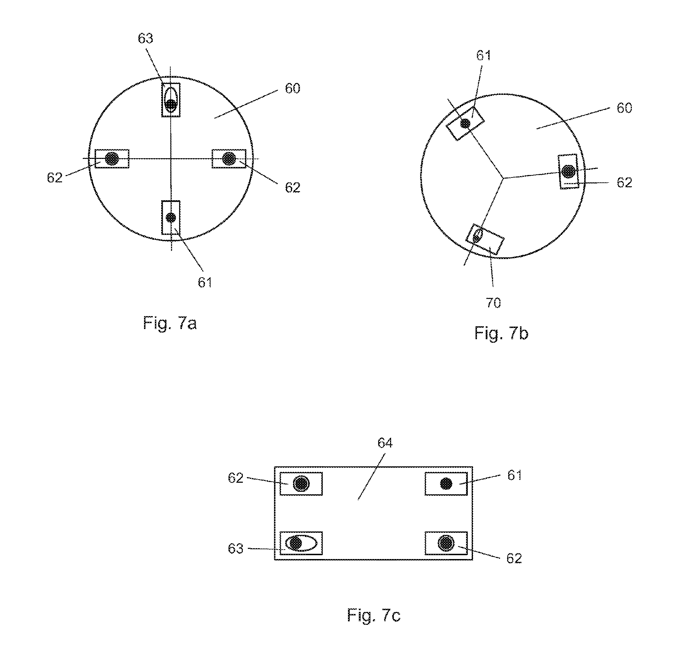

Ein Wägemodulanordnung zur Wägung eines grossvolumigen Behälters umfasst in der Regel mindestens drei Wägemodule, von denen eines nahezu spielfrei eingestellt ist und die anderen ein vorgegebenes Spiel haben. Die Wägemodule werden in Abhängigkeit der Form des Behälters, insbesondere der Form seiner Grundfläche, zu einander ausgerichtet. Die Ausrichtung der einzelnen Wägemodule zueinander wird so gewählt, dass weder einwirkende Störkräfte noch eine thermische Ausdehnung oder Kontraktion des Behälters das Wägeergebnis beeinflussen. Die Figuren 7a bis 7c stellen Beispiele für unterschiedliche Wägemodulanordnungen dar.

Figur 7a zeigt einen Behälter 60 mit einer runden Grundfläche und einer mit dem Behälter 60 fest verbundenen Wägemodulanordnung. Die Wägemodulanordnung umfasst vier radial ausgerichtete Wägemodule 61, 62, 63, welche am Rand des Behälters 60 jeweils um 90° versetzt zueinander angeordnet sind. Die Längsachsen der hier im Wesentlichen rechteckigen Wägemodule 61, 62, 63 sind radial in Bezug auf die Grundfläche des Behälters 60 ausgerichtet. Ein Wägemodul 61 ist nahezu spielfrei eingestellt und dient als Fixpunkt und/oder Angelpunkt. Diesem Wägemodul 61 gegenüber ist ein in einer Richtung eingeschränkt bewegliches Wägemodul 63 angeordnet. Die beiden letzten Positionen werden von zwei voll beweglichen Wägemodulen 62 eingenommen.

Aufgrund der Ausgestaltung der in den Figuren 1 bis 6 gezeigten Wägemodule mit einem Kraftübertragungselement bzw. einer eine Wägezelle und ein Kraftübertragungselement umfassenden Einheit, welche zwischen zwei Aufnahmeschalen angeordnet ist, kann die Einstellung der Wägemodule 61, 62 und 63 durch Ausrichtung und/oder Ausgestaltung der Aufnahmeschalen festgelegt werden, indem entweder eine der Aufnahmeschalen in einer neuen Position festgestellt wird, wie es aufgrund der in Figuren 1 und 2 gezeigten Durchführung vorgesehen ist, oder durch einfachen Austausch einer der beiden Aufnahmeschalen gegen eine andere Aufnahmeschale. Beim Einsatz einer balkenartigen Wägezelle wird der Austausch der mit einer Montageeinrichtung verbundenen Aufnahmeschale bevorzugt.

Ein spielfreies Wägemodul 61 wird realisiert, indem zwei Aufnahmeschalen mit elliptischen Mulden verwendet werden, die so angeordnet werden, dass ihre Längsachsen orthogonal zueinander stehen. Ein eingeschränkt bewegliches Wägemodul 63 weist vorzugsweise eine Aufnahmeschale mit einer kreisförmigen Mulde und eine Aufnahmeschale mit einer elliptischen Mulde auf, wobei durch Drehung der elliptischen Aufnahmeschale die bevorzugte Bewegungsrichtung beliebig verändert werden kann. Ein freibewegliches Wägemodul 62 umfasst zwei Aufnahmeschalen mit kreisförmigen Mulden.

Figur 7b zeigt ebenfalls einen Behälter 60 mit runder Grundfläche. Die mit dem Behälter 60 fest verbundene Wägemodulanordnung umfasst drei Wägemodule 61, 62, 70, welche am Rand des Behälters 60 tangential ausgerichtet sind. Die Anordnung wird von einem spielfreien Wägemodul 61, einem eingeschränkt beweglichen Wägemodul 70 und einem voll beweglichen Wägemodul 63 gebildet, welche in Bezug auf die Grundfläche des Behälters 60 in einem Abstand von ungefähr 120° zueinander angeordnet sind.

Figur 7c zeigt einen Behälter 64 mit einer eckigen Grundfläche. Er wird von vier Wägemodulen 61, 62, 63 getragen, welche an den vier Ecken des Behälters 64 angeordnet sind. Zwei freibewegliche Wägemodule 62 sind an diagonal gegenüberliegenden Ecken angeordnet und an den anderen beiden Ecken sind ein spielfreies Wägemodul 61 und ein eingeschränkt bewegliches Wägemodul 62 angeordnet.

Anhand der Figuren 7a bis 7c wird deutlich, dass die Wägemodule eine tragende Funktion haben und den Kontakt zwischen dem Behälter und der den Behälter tragenden Struktur herstellen. Eine Fehleinstellung der Wägemodule hat somit auch Einfluss auf die Standfestigkeit des Behälters, welche gerade bei z. B. aggressiven und/oder umweltschädlichen Inhalten ständig gewährleistet sein muss. Aus diesem Grund ist es notwendig, die Wägemodule möglichst stabil auszugestalten und sowohl gegen Überlasten, Störkräfte und auch einwirkende Drehmomente zu schützen.

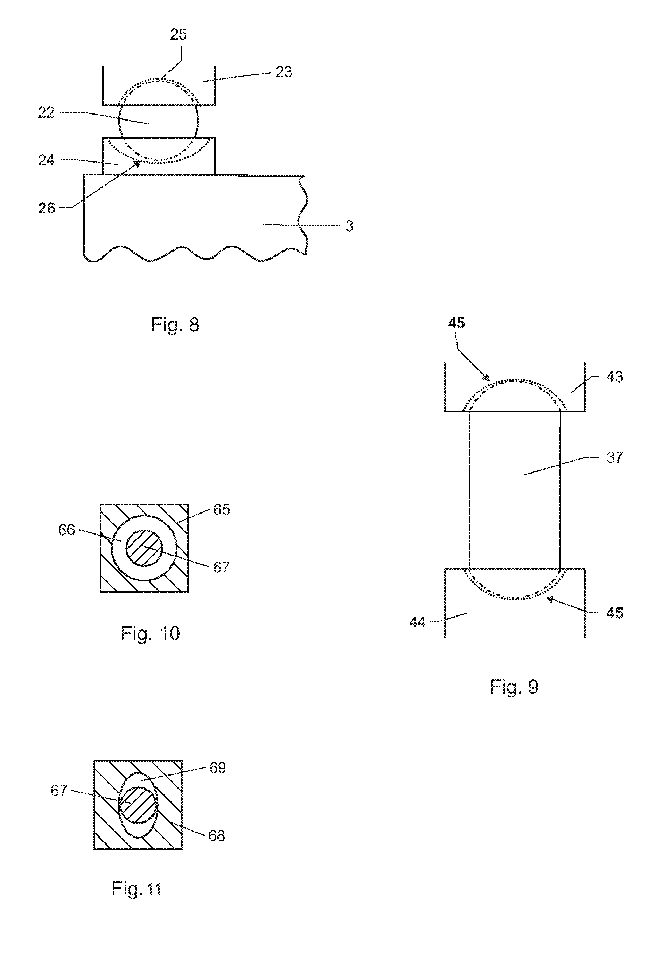

Die Figuren 8 und 9 zeigen als Seitenansichten die Anordnung von Aufnahmeschalen, Kraftübertragungselement und Wägezelle. In Figur 8 ist eine balkenartige Wägezelle 3 gezeigt und in Figur 9 eine Rocker-Pin-Wägezelle 37, bei der das Kraftübertragungselement eine Einheit mit der Wägezelle bildet.

Die in Figur 8 gezeigte Wägezelle 3 ist mit einer Aufnahmeschale 24 verbunden. Das kugelförmige Kraftübertragungselement 22 ist zwischen der mit der Wägezelle 3 verbundenen Aufnahmeschale 24 und einer weiteren Aufnahmeschale 23 angeordnet. Die Aufnahmeschalen 23, 24 weisen beide konkave Mulden 25, 26 auf, welche unterschiedliche Querschnitte haben. Die Mulde 26 hat einen kreisförmigen Querschnitt und die Mulde 25 hat einen elliptischen Querschnitt, wobei die Längsachse der Mulde 25 senkrecht zur Zeichnungsebene ausgebildet ist, so dass die Auslenkungsrichtung des Kraftübertragungselements 22 senkrecht zur Zeichnungsebene begrenzt wird. Ein vergleichbarer Effekt kann mit zwei parallel zueinander ausgerichteten elliptischen Mulden erreicht werden. Die Radien beider Mulden sind grösser als der Radius des Kraftübertragungselements 22.

Die in Figur 9 dargestellte Rocker-Pin-Wägezelle 37 ist direkt zwischen zwei Aufnahmeschalen 43, 44 angeordnet, welche in dieser Darstellung konkave Mulden 45 mit elliptischen Querschnitten aufweisen. Die Mulden 45 sind so ausgerichtet, dass ihre Längsachse senkrecht zur Zeichnungsebene verlaufen und das Spiel der Wägezelle stärker eingeschränkt wird.

Die Figuren 10 und 11 stellen in einer Schnittzeichnung zwei Aufnahmeschalen 65, 68 mit konkaven Mulden 66, 69 und einem darin angeordneten Kraftübertragungselement 67 bzw. einer Einheit aus Kraftübertragungselement und Wägezelle orthogonal zur Lastrichtung im Schnitt dar. Die in Figur 10 gezeigte Aufnahmeschale 65 weist eine konkave Mulde 66 mit kreisförmigem Querschnitt auf, welche eine Bewegung des Kraftübertragungselements 67 in allen Richtungen erlaubt. In Figur 9 ist eine Aufnahmeschale 68 mit einer konkaven Mulde 69 mit elliptischem Querschnitt gezeigt, wobei in diesem Fall die Bewegung des Kraftübertragungselements 67 in eine Vorzugsrichtung gelenkt wird.

Allein auf Grund der Auswahl der Querschnitte der konkaven Mulde in den Aufnahmeschalen kann somit eine bevorzugte Bewegungsrichtung des Kraftübertragungselements und damit auch des Wägemoduls vorgegeben werden. Es ist auch möglich, ein Wägemodul ausschliesslich mit Aufnahmeschalen mit elliptischen Mulden zu versehen.

Bei Verwendung einer Rocker-Pin-Wägezelle ist es auch möglich die Zylinderendflächen der Wägezelle unterschiedlich auszugestalten, beispielsweise indem eine Endfläche einen kreisförmigen und die gegenüberliegende Endfläche einen elliptischen Querschnitt aufweist.

Die Lenkung und Begrenzung der Bewegung des Kraftübertragungselements ist vor allem vorteilhaft, wenn sich die Ausdehnung des zu wägenden Behälters oder der zu wägenden Last ändert, wie es beispielsweise bei Temperaturänderungen geschehen kann.

### Bezugszeichenliste

- 1: Montageeinrichtung
- 2: Montageeinrichtung
- 3: Wägezelle
- 4: Durchführung
- 5: Vertiefung in 1
- 6: Materialsteg
- 7: Durchführung
- 8: Sockel
- 9: Einbauhilfe
- 10: Haken
- 11: Haken
- 12: Überlastsicherung
- 13: Durchführung
- 14: Befestigungsblock
- 15: Bohrung
- 16: Vertiefung in 2
- 17: Aussparung
- 18: vertikales Begrenzungsmittel
- 19: Verankerung
- 20: Kopf
- 21: Anschlag
- 22: Kraftübertragungselement
- 23: Aufnahmeschale
- 24: Aufnahmeschale
- 25: konkave Mulde in 23
- 26: konkave Mulde in 24
- 27: Oberfläche von 2
- 28: Befestigungsmittel
- 29: Befestigungsmittel
- 30: Last
- 31: festes horizontales Begrenzungsmittel
- 32: einstellbares horizontales Begrenzungsmittel
- 33: Durchführung
- 34: tragende Struktur
- 35: Befestigungseinrichtung
- 36: seitlicher Anschlag
- 37: Wägezelle
- 38: Montageeinrichtung
- 39: Montageeinrichtung
- 40: Vertiefung in 38
- 41: Vertiefung in 39
- 42: Abhebsicherung
- 43: Aufnahmeschale
- 44: Aufnahmeschale
- 45: konkave Mulde in 43
- 46: konkave Mulde in 44
- 47: Abhebelement
- 48: Führungselement
- 49: Sockel
- 50: Sicherungsstift
- 51: Aussparung
- 52: Begrenzungsmittel
- 60: Behälter
- 61: spielfreies Wägemodul
- 62: voll bewegliches Wägemodul
- 63: eingeschränkt bewegliches Wägemodul
- 64: Behälter
- 65: Aufnahmeschale
- 66: konkave Mulde in 65
- 67: Kraftübertragungselement
- 68: Aufnahmeschale
- 69: konkave Mulde in 68
- 70: eingeschränkt bewegliches Wägemodul

## Patentansprüche

1. Wägemodul mit einer ersten Montageinrichtung (1), welche in Kraftkontakt mit einer zu bestimmenden Last (30) steht, einer zweiten Montageinrichtung (2), welche mit einer das Wägemodul tragenden Struktur (34) verbindbar ist, und einer zwischen den Montageeinrichtungen (1, 2) angeordneten Wägezelle (3), welche mit einem Kraftübertragungselement (22) zusammenwirkt, **dadurch gekennzeichnet, dass** das Wägemodul eine erste und eine zweite Aufnahmeschale (23, 24), welche jeweils eine Mulde (25, 26) zur Aufnahme des Kraftübertragungselements (22) aufweisen und zwischen den Montageeinrichtungen (1, 2) angeordnet sind, wobei mindestens eine Mulde (25) einen elliptischen Querschnitt in einer im Wesentlichen zur Lastrichtung orthogonalen Ebene aufweist.

2. Wägemodul nach Anspruch 1, **dadurch gekennzeichnet, dass** das Kraftübertragungselement (22) kugelförmig ausgestaltet ist.

3. Wägemodul nach einem der Ansprüche 1 oder 2, **dadurch gekennzeichnet, dass** die Wägezelle und das Kraftübertragungselement eine Einheit (37) bilden, welche zwei konvexe Zylinderendflächen mit gleicher oder unterschiedlicher Geometrie aufweist.

4. Wägemodul nach einem der Ansprüche 1 bis 3, **dadurch gekennzeichnet, dass** die erste Mulde (25) und/oder die zweite Mulde (26) einen kreisförmigen Querschnitt aufweist.

5. Wägemodul einem der Ansprüche 1 bis 4, **dadurch gekennzeichnet, dass** der Radius der Mulde (25, 26, 45, 46) grösser ist als der Radius des in der Mulde (25, 26, 45, 46) angeordneten Teils des Kraftübertragungselements (22, 37).

6. Wägemodul nach einem der Ansprüche 1 bis 5, **dadurch gekennzeichnet, dass** die mit einer Mulde (26, 45) mit elliptischen Querschnitt ausgestaltete erste und/oder zweite Aufnahmeschale (23, 43) in Bezug auf die Längsachse der Mulde (26, 45) in mindestens zwei zueinander verdrehten Winkeln feststellbar ist.

7. Wägemodul nach Anspruch 6, **dadurch gekennzeichnet, dass** die mit einer Mulde (26, 45) mit elliptischen Querschnitt ausgestaltete erste Aufnahmeschale und/oder die mit einer Mulde (26, 45) mit elliptischen Querschnitt ausgestaltete zweite Aufnahmeschale (23, 43) in Bezug auf die Längsachse der Mulde (26, 45) in zwei zueinander um 90° verdrehten Winkeln feststellbar ist.

8. Wägemodul nach einem der Ansprüche 1 bis 7, **dadurch gekennzeichnet, dass** die erste und die zweite Aufnahmeschale (43, 44) mit jeweils einer der Montageeinrichtungen (38, 39) verbunden sind.

9. Wägemodul nach einem der Ansprüche 1 bis 8, **dadurch gekennzeichnet, dass** die erste Aufnahmeschale (23) mit einer Montageeinrichtung (1) verbunden ist und die zweite Aufnahmeschale (24) an der Wägezelle (3) ausgestaltet ist.

10. Wägemodulanordnung mit mindestens drei Wägemodulen (61, 62, 63) nach einem der Ansprüche 1 bis 9 zur Bestimmung der Masse und/oder einer von der Masse ableitbaren physikalischen Grösse einer Last, welche in Kraftkontakt mit der Wägemodulanordnung steht.
